# EUROPÄISCHE PATENTSCHRIFT

(11) **EP 3 991 160 B1**
(45) Veröffentlichungstag und Bekanntmachung des Hinweises auf die Patenterteilung: **08.07.2026**
(21) Anmeldenummer: 20727611.4
(22) Anmeldetag: 20.05.2020
(51) Int. Cl.: G08G 1/01, G06F 21/62

(54) **VERFAHREN ZUM ANONYMISIEREN VON FAHRZEUGDATEN**
METHOD FOR ANONYMIZING VEHICLE DATA
PROCÉDÉ D'ANONYMISATION DE DONNÉES DE VÉHICULE

(30) Priorität: 28.06.2019 DE 102019209487
(43) Veröffentlichungstag der Anmeldung: 04.05.2022
(73) Patentinhaber: VOLKSWAGEN AKTIENGESELLSCHAFT, 38440 Wolfsburg (DE)
(72) Erfinder: MAX, Stephan, 38518 Gifhorn (DE); WEGNER, Martin, 38104 Braunschweig (DE)
(86) Internationale Anmeldenummer: PCT/EP2020/064079
(87) Internationale Veröffentlichungsnummer: WO 2020/259931

(56) Entgegenhaltungen:
- DE-A1- 102015 213 393
- DE-A1- 102015 226 650
- DE-A1- 102016 225 287
- DE-B3- 102016 202 659
- US-A1- 2013 030 688

## Beschreibung

Die Erfindung betrifft ein Verfahren eines Kraftfahrzeugs zum Anonymisieren von Fahrzeugdaten, insbesondere zum Anonymisieren von an einen Server übermittelten Fahrzeugdaten basierend auf von diesem Kraftfahrzeug und von anderen Fahrzeugen, die ebenfalls Daten an den Server übermitteln, empfangenen V2V-Daten.

Heutige Fahrzeuge sind durch Verwendung mobiler Kommunikationstechnologien (abhängig von einer Netzabdeckung) nahezu ständig zur Datenkommunikation mit den Netzwerkservern von Dienstanbietern in der Lage. Durch den Dienstanbieter, beispielsweise einen Fahrzeughersteller, können mittels der Kommunikation verschiedene Services, beispielsweise das Bereitstellen von Informationsdaten zu Verkehr, Wetter, Stau, etc. realisiert werden. Das Realisieren beziehungsweise Verbessern derartiger Services erfordert dabei gegebenenfalls auch das Übermitteln von Daten von den Fahrzeugen an die Netzwerkserver. Mittels dieser sogenannten Flottendaten lassen sich beispielsweise Informationsdaten zur Verkehrsdichte und Verkehrsstörungen aber auch Informationen zu lokalem Wetter oder einer Parkplatzsituation nahezu in Echtzeit und beispielsweise in Form von Karteninformationen bereitstellen.

Derartige Flottendaten werden dabei anhand von durch einzelne Fahrzeugen an den Netzwerkserver übermittelten Datensätzen erstellt. Der einzelne Datensatz weist dabei beispielsweise Informationen zu einer Position und Geschwindigkeit des Fahrzeugs sowie zu von einem oder mehreren Sensoren des Fahrzeugs gemessenen Daten auf. Anhand eines solchen Datensatzes lässt sich beispielsweise ermitteln, ob sich das Fahrzeug in einem Stau befindet, ob das Fahrzeug einem Regenschauer ausgesetzt ist, ob das Fahrzeug eine Strecke mit schlechter Fahrbahnqualität befährt oder ob das Fahrzeug eine Baustelle durchfährt. Derartige Informationen lassen sich beispielsweise anhand von Sensordaten eines Regensensors, eines Sensors zur Eintauchtiefe eines oder mehrere Stoßdämpfer oder eines bildgebenden Sensors (gegebenenfalls gekoppelt mit Bilderkennung) ermitteln.

Anhand eines von einem Fahrzeug übermittelten Datensatzes lassen sich jedoch auch Informationen zu dem Fahrzeug ermitteln, zu deren Nutzung der Fahrzeugführer nicht zugestimmt hat. Ferner birgt eine Nutzung der Daten durch unbefugte Dritte die Gefahr des Missbrauchs, beispielsweise wenn anhand solcher Datensätze Bewegungsprofile von Fahrzeugen und somit Personen erstellt werden. Aus dem Stand der Technik sind daher bereits verschiedene Verfahren zum Anonymisieren solcher Datensätze von Fahrzeugen bekannt.

Die DE 10 2011 106 295 A1 offenbart ein Verfahren, bei dem von Fahrzeugen erzeugte Informationsdaten über eine Backend-Servervorrichtung eines Sicherheitsbetreibers an einen Dienstanbieter übermittelt werden. Alle Daten, die eine Identifizierung des Fahrzeugs ermöglichen, werden dabei nur an die Backend-Servervorrichtung, von dieser jedoch nicht an den Dienstanbieter übermittelt. Die Schrift offenbart ferner das Sammeln von Informationsdaten mehrerer Fahrzeuge in der Backend-Servervorrichtung und deren gemeinsame Übermittelung an den Dienstanbieter zur Anonymisierung der Informationsdaten der Fahrzeuge. Dieses Verfahren setzt jedoch stets die Vertrauenswürdigkeit des Sicherheitsbetreibers beziehungsweise die Sicherheit der Backend-Servervorrichtung gegenüber Angriffen voraus.

Die DE 10 2016 225 287 A1 der Erfinder offenbart ein Verfahren, in dem von einem Kraftfahrzeug empfangende Daten örtlich oder zeitlich verschleiert werden, um eine Zuordnung der Daten zu einem einzelnen Fahrzeug zu erschweren beziehungsweise zu verhindern. Das Verschleiern erfolgt dabei bevorzugt umso stärker, je geringer ein Verkehrsfluss bezogen auf Ort und Zeit der Datenerfassung ist. Dadurch wird ausgenutzt, dass die Präsenz einer Vielzahl von Daten übermittelnden Fahrzeugen das Zuordnen der Daten zu einzelnen Fahrzeugen erschwert. Der Verkehrsfluss wird dabei über Sensordaten des Fahrzeugs ermittelt, wobei davon ausgegangen wird, dass alle Fahrzeuge Datensätze an den Netzwerkserver übermitteln.

Da jedoch in der Realität noch nicht alle Fahrzeuge mit der Technologie zum Upload von Datensätzen ausgestattet sind und ferner die adressierten Netzwerkserver variieren können, wird in der DE 10 2016 225 287 A1 mittels Korrekturfaktoren die Größe einer Anonymisierungsgruppe erweitert und somit die Verschleierung verstärkt. Da eine solche Verschleierung auch Auswirkung auf die Verwertbarkeit der Datensätze haben kann, ist das durch die Korrekturfaktoren bedingte verstärkte Verschleiern der Datensätze nachteilig.

Die US 2013/030688 A1 offenbart ein Verfahren zum Ermitteln von Verkehrsdichtedaten anhand von mittels Fahrzeug-zu-Fahrzeug Kommunikation empfangener Informationen.

Aus der DE 102015226650 B4 ist ein Verfahren bekannt, bei dem ein Fahrzeug sensorbasiert einen ersten Wert eines Fahrparameter bestimmt, weitere Werte dieses Fahrparameters von umliegenden Fahrzeugen empfängt und einen zweiten Wert des Fahrparameters anhand des ersten Werts und der weiteren Werte des Fahrparameters, beispielsweise als Mittelwert aller Werte des Fahrparameters bestimmt. Der zweite Wert kann an einen Server übermittelt werden.

Der Erfindung liegt daher die Aufgabe zugrunde, den Stand der Technik zu bereichern und ein Verfahren zum Anonymisieren von Fahrzeugdaten vorzuschlagen, welche die Nachteile des Standes der Technik überwindet oder zumindest verringert und insbesondere ein bedarfsgerechtes Anonymisieren beziehungsweise Verschleiern von Fahrzeugdaten ermöglicht.

Die erfindungsgemäße Aufgabe wird gelöst durch die Gegenstände der Hauptansprüche. Bevorzugte Weiterbildungen sind Gegenstand der jeweils rückbezogenen Unteransprüche.

Ein erster Aspekt der vorliegenden Erfindung betrifft ein von einem Kraftfahrzeug durchgeführtes Verfahren zum Anonymisieren von Fahrzeugdaten. In diesem erfindungsgemäßen Verfahren wird zunächst ein Datensatz basierend auf von dem Kraftfahrzeug erfassten Fahrzeugdaten erstellt. Der Datensatz enthält dabei neben den Fahrzeugdaten auch Informationen zum Ort und/oder zur Zeit der Datenerfassung. Zwar sind derartige Informationen zum Ort und/oder der Zeit gegebenenfalls für die Verwertbarkeit der Fahrzeugdaten notwendig, gleichzeitig ermöglichen sie jedoch gegebenenfalls eine Identifikation des Kraftfahrzeugs. In dem erfindungsgemäßen Verfahren erfolgt ferner ein Empfangen von Gruppeninformationen von anderen Fahrzeugen mittels Fahrzeug-zu-Fahrzeug Kommunikation. Dem Fachmann sind die technischen Details von Fahrzeug-zu-Fahrzeug Kommunikation (Car2Car, Vehicle2Vehicle), beispielsweise mittels pWLAN, bekannt, weswegen hier nicht im Detail auf diese technischen Details eingegangen wird.

Im erfindungsgemäßen Verfahren wird eine Anzahl anderer Fahrzeuge, mit denen die Fahrzeug-zu-Fahrzeug Kommunikation durchgeführt wird, anhand der von den mittels Fahrzeug-zu-Fahrzeug Kommunikation empfangenen Gruppeninformationen ermittelt. Es wird ermittelt, wie viele der anderen Fahrzeuge, mit denen die Fahrzeug-zu-Fahrzeug Kommunikation durchgeführt wird, sich in einem vorbestimmten Umfeld des Fahrzeugs befinden und/oder in einer vorbestimmten Zeit einen Ort der Datenerfassung durch das Kraftfahrzeug passieren. Anhand der Anzahl der so ermittelten anderen Fahrzeuge beziehungsweise der Verkehrsflussdaten erfolgt im erfindungsgemäßen Verfahren ferner ein Anonymisieren des Datensatzes, insbesondere durch örtliche Verschleierung der Informationen zum Ort und/oder durch zeitliche Verschleierung der Informationen zur Zeit der Datenerfassung. Der so anonymisierte Datensatzes wird schließlich an einen Netzwerkserver übermittelt. Der Netzwerkserver verfügt somit lediglich über anonymisierte Daten und eine Nachverfolgung einzelner Fahrzeuge beziehungsweise Personen ist somit erschwert oder unmöglich.

In einer bevorzugten Durchführungsform des erfindungsgemäßen Verfahrens erfolgt das Erfassen von Fahrzeugdaten mittels zumindest eines zum Erfassen von Umgebungsdaten eingerichteten ersten Sensors. Der zumindest eine erste Sensor ist dabei dazu ausgebildet, die Umgebung des Fahrzeugs betreffende Sensorsignale zu erfassen. Ein mittels des zumindest einen ersten Sensors empfangenes Umgebungssignal versetzt das Kraftfahrzeug somit in die Lage, sich über seine Umgebung zu informieren und bildet bevorzugt eine Vielzahl von Umweltinformationen ab. Bei einem ersten Sensor handelt es sich beispielsweise um bildgebende Sensoren, wie Kameras, oder um Abstandssensoren, wie LIDAR.

Ebenfalls bevorzugt erfolgt das Erfassen von Fahrzeugdaten mittels zumindest eines zum Erfassen von Fahrzeugdaten eingerichteten zweiten Sensors. Der zumindest eine zweite Sensor ist dabei dazu ausgebildet, das Fahrzeug selbst betreffende Sensorsignale zu erfassen. Ein mittels des zumindest einen zweiten Sensors empfangenes Zustandssignal versetzt das Kraftfahrzeug bevorzugt in die Lage, sich über seinen Eigenzustand zu informieren und bildet dazu bevorzugt eine Vielzahl von Zustandsinformationen ab. Bei einem zweiten Sensor handelt es sich somit beispielsweise um Raddrehzahlmesser und dergleichen.

In einer ebenfalls bevorzugten Durchführungsform des erfindungsgemäßen Verfahrens des Kraftfahrzeugs erfolgt die Fahrzeug-zu-Fahrzeug Kommunikation mittels eines ersten Kommunikationsmoduls. Das Kommunikationsmodul ist dabei ein zur Kommunikation mit einem Netzwerkserver und anderen Kraftfahrzeugen eingerichtetes erstes Kommunikationsmodul. Darüber hinaus kann das Kommunikationsmodul zur Kommunikation mit weiteren Vorrichtungen, wie beispielsweise GPS-Satelliten oder einer smarten Infrastruktur eingerichtet sein. Das Kommunikationsmodul weist bevorzugt einen Funk-, Mobilfunk-, WLAN-, und/oder Bluetooth-Transceiver oder alternative Drahtloskommunikationsgeräte auf.

Ein weiterer Aspekt der vorliegenden Erfindung betrifft ein von einem Netzwerkserver durchgeführtes Verfahren zum Anonymisieren von Fahrzeugdaten. In diesem Verfahren erfolgt das Empfangen eines Datensatzes von einem Kraftfahrzeug, wobei der Datensatz auf von dem Kraftfahrzeug erfassten Fahrzeugdaten basiert und neben den Fahrzeugdaten auch Informationen zum Ort und/oder zur Zeit der Datenerfassung aufweist. Ferner empfängt der Netzwerkserver einer Anzahl anderer Fahrzeuge von dem Kraftfahrzeug, wobei die Anzahl anderer Fahrzeuge auf von mittels Fahrzeug-zu-Fahrzeug Kommunikation durch das Kraftfahrzeug und von anderen Fahrzeugen empfangenen Gruppeninformationen basieren. Gemäß diesem erfindungsgemäßen Verfahren erfolgt ferner ein Anonymisieren des empfangenen Datensatzes basierend auf der ebenfalls empfangenen Anzahl der anhand der Gruppeninformationen ermittelten anderen Fahrzeuge und/oder durch zeitliche Verschleierung der Informationen zur Zeit der Datenerfassung basierend auf der Anzahl der anhand der Gruppeninformationen ermittelten anderen Fahrzeuge.

Die erfindungsgemäßen Verfahren ermöglichen vorteilhaft, dass die anhand der Fahrzeugdaten ermittelten Datensätze letztlich stets nur in anonymer Form für die Weiterverarbeitung vorliegen. Die Anonymisierung erfolgt dabei in Abhängigkeit eines Verkehrsflusses für den Bereich der Datenerhebung. Über Car-2-Car-Kommunikation kommunizieren die Fahrzeuge untereinander regelmäßig ihre Position, Geschwindigkeit, Richtung, etc. lokal über pWLAN oder C-V2X (Cellular V2X). Das diese Nachrichten von anderen Fahrzeugen empfangende Kraftfahrzeug erhält entsprechend eine Information darüber, dass und wie viele entsprechend ausgestattete Fahrzeuge sich in Kommunikationsreichweite befinden sowie deren Position, Fahrrichtung, etc. Diese Informationen werden in den erfindungsgemäßen Verfahren vorteilhaft zum Abschätzen des Verkehrsflusses und, darauf aufbauend, zum Anonymisieren der Datensätze verwendet.

In einer bevorzugten Durchführungsform der erfindungsgemäßen Verfahren zeigen die von dem Kraftfahrzeug von verschiedenen anderen Fahrzeugen empfangenen Gruppeninformationen an, dass die anderen Fahrzeuge ebenfalls Datensätze an den Netzwerkserver übermitteln. Die Gruppeninformationen werden dabei von jedem anderen Fahrzeug einzeln empfangen und zeigen an, dass das jeweilige Fahrzeug mit demselben Netzwerkserver kommuniziert, wie das in den erfindungsgemäßen Verfahren die Fahrzeugdaten erfassende Fahrzeug. Somit wird sichergestellt, dass die anderen Fahrzeuge für den Netzwerkserver "sichtbar" und somit zum Durchführen der Anonymisierung der Fahrzeugdaten geeignet sind. Die Gesamtheit der von dem Kraftfahrzeug empfangenen Gruppeninformationen spezifiziert somit die Gesamtzahl der in Kommunikationsverbindung mit dem Netzwerkserver stehenden Fahrzeuge.

Ferner bevorzugt weisen die von dem Kraftfahrzeug empfangenen Gruppeninformationen ferner den Ort, die Geschwindigkeit und/oder die Fahrtrichtung des die Gruppeninformation jeweils an das Kraftfahrzeug übermittelnden anderen Fahrzeugs auf. Diese Informationen sind vorteilhaft zum Ermitteln eines Verkehrsflusses am Ort der Datenerfassung verwendbar, beispielsweise indem sie eine Abschätzung ermöglichen, wie viele der anderen Fahrzeuge in einem vorbestimmten Zeitraum den Ort der Datenerfassung passiert haben oder passieren werden. Je größer die Anzahl dieser Fahrzeuge ist, desto sicherer ist eine Anonymisierung.

Das Anonymisieren der Datensätze erfolgt in den erfindungsgemäßen Verfahren bevorzugt durch eine örtliche Verschleierung. Dabei werden die Daten hinsichtlich des Ortes ihrer Erfassung verschleiert. Ebenfalls bevorzugt erfolgt das Anonymisieren durch eine zeitliche Verschleierung, wobei die Daten hinsichtlich des Zeitpunktes der Erfassung verschleiert werden. Durch die örtliche Verschleierung sowie die zeitliche Verschleierung wird eine Gruppenanonymität erreicht, so dass die erfassten Daten nur noch einer hinreichend großen Gruppe von Fahrzeugen zugeordnet werden können, nicht mehr einem einzigen oder einigen wenigen Fahrzeugen. Es ist somit nicht mehr oder nur mit unverhältnismäßig großem Aufwand möglich, auf Basis der Daten Rückschlüsse auf personenbezogene Daten zu ziehen.

Gemäß einer Durchführungsform der erfindungsgemäßen Verfahren ist eine Stärke der örtlichen und/oder zeitlichen Verschleierung umgekehrt proportional zu einer anhand der Gruppeninformationen ermittelten Gruppenstärke der anderen Fahrzeuge. Bevorzugt ist eine Stärke der örtlichen und/oder zeitlichen Verschleierung umgekehrt proportional zur Stärke von einem anhand der Gruppeninformationen ermittelten Verkehrsfluss am Ort der Datenerfassung. Mit anderen Worten ist im erfindungsgemäßen Verfahren die örtliche oder zeitliche Verschleierung umso geringer, je größer der Verkehrsfluss bezogen auf Ort oder Zeitpunkt der Erfassung des Datums durch das Kraftfahrzeug ist. Wie bereits erwähnt, ist das Ziel der Verschleierung eine Gruppenanonymität, wobei dieses Ziel bei großem Verkehrsfluss bereits mit einer geringen Verschleierung erreicht werden kann.

Bei einem geringen Verkehrsfluss ist hingegen eine große Verschleierung sinnvoll, um einen Personenbezug wirksam auszuschließen. Beispielsweise wird ein Messwert tagsüber auf einer Autobahn in der Regel von einer Vielzahl von Fahrzeugen in kurzer Zeit erfasst. Hier ist eine geringfügige Verschleierung ausreichend. Nachts auf einer wenig befahrenen Nebenstraße wird ein Messwert unter Umständen nur von einem einzigen Fahrzeug erfasst. In diesem Fall ist eine weitreichende Verschleierung angebracht. Indem der Verkehrsfluss anhand der mittels Fahrzeug-zu-Fahrzeug empfangenen Gruppeninformationen ermittelt wird, ist sichergestellt, dass nur solche Fahrzeuge berücksichtigt werden, die durch eigene Übermittlung von Datensätzen für den Netzwerkservers eines Dienstanbieters überhaupt "sichtbar" sind.

Ferner bevorzugt erfolgt die örtliche Verschleierung durch Zuordnen des empfangenen Datensatzes zu einem Raster. Die Daten können beispielsweise in ein km-Raster integriert werden. Bevorzugt wird ein Ort der Datenerfassung durch einen räumlichen Bereich der Datenerfassung ersetzt. Ebenfalls bevorzugt erfolgt ein Verschieben des Orts der Datenerfassung, besonders bevorzugt entlang einer von dem Fahrzeug befahrenen Strecke.

Der Wert der Daten wird dabei nicht übermäßig reduziert, dennoch ist es nicht mehr möglich, auf Basis der Daten Rückschlüsse auf personenbezogene Daten zu ziehen. Ebenfalls bevorzugt erfolgt die zeitliche Verschleierung durch eine Verschiebung des Messzeitpunktes des empfangenen Datums. Im einfachsten Falle können die Messzeitpunkte über den Verschiebungszeitpunkt gleichverteilt werden. Ebenfalls bevorzugt wird die Zeit der Datenerfassung durch einen zeitlichen Bereich der Datenerfassung ersetzt. Bevorzugt ist in diesen Durchführungsformen die Größe der Bereiche oder der Grad des Verschiebens umgekehrt proportional zu einer mittels der Gruppeninformationen ermittelten Gruppenstärke.

In einer ferner bevorzugten Durchführungsform basieren die Verkehrsflussdaten ferner auf von durch Fahrzeugsensoren erfassten Umgebungsdaten. Besonders bevorzugt werden mittels erster Sensoren des Kraftfahrzeugs Umgebungsdaten, insbesondere Abstände und Geschwindigkeiten von das Kraftfahrzeug umgebenden Fahrzeugen ermittelt. Diese Daten werden bevorzugt zusätzlich zu den Gruppeninformationen zum Ermitteln des Verkehrsflusses herangezogen, insbesondere insofern der Verkehrsfluss selbst Informationsgehalt aufweist, also nicht zwangsläufig zum Anonymisieren der Fahrzeugdatensätze.

Ein weiterer Aspekt der Erfindung betrifft ein Kraftfahrzeug, insbesondere einen zum Durchführen der Schritte eines Kraftfahrzeugs im erfindungsgemäßen Verfahren eingerichteten Personenkraftwagen mit Verbrennungs-, Elektro- oder Hybridmotor. Das Kraftfahrzeug weist hierfür zumindest einen zum Erfassen von Umgebungsdaten eingerichteten ersten Sensor und zumindest einen zum Erfassen von Fahrzeugdaten eingerichteten zweiten Sensor auf.

Der zumindest eine erste Sensor ist dabei dazu ausgebildet, die Umgebung des Fahrzeugs betreffende Sensorsignale zu erfassen. Der zumindest eine zweite Sensor ist dabei dazu ausgebildet, das Fahrzeug selbst betreffende Sensorsignale zu erfassen. Dabei versetzt ein mittels des zumindest einen ersten Sensors empfangenes Umgebungssignal das Kraftfahrzeug bevorzugt in die Lage, sich über seine Umgebung zu informieren und bildet bevorzugt eine Vielzahl von Umweltinformationen ab. Ein mittels des zumindest einen zweiten Sensors empfangenes Zustandssignal versetzt das Kraftfahrzeug bevorzugt in die Lage, sich über seinen Eigenzustand zu informieren und bildet dazu bevorzugt eine Vielzahl von Zustandsinformationen ab. Bei dem ersten Sensor handelt es sich beispielsweise um bildgebenden Sensoren, wie Kameras, oder um Abstandssensoren, wie LIDAR. Bei den zweiten Sensoren handelt es sich beispielsweise um Raddrehzahlmesser und dergleichen.

Das erfindungsgemäße Kraftfahrzeug weist ferner ein zur Kommunikation mit einem Netzwerkserver und anderen Kraftfahrzeugen eingerichtetes erstes Kommunikationsmodul auf. Darüber hinaus kann das Kommunikationsmodul zur Kommunikation mit weiteren Vorrichtungen, wie beispielsweise GPS-Satelliten oder einer smarten Infrastruktur eingerichtet sein. Das Kommunikationsmodul weist bevorzugt einen Funk-, Mobilfunk-, WLAN-, und/oder Bluetooth-Transceiver oder alternative Drahtloskommunikationsgeräte auf.

Das Kraftfahrzeug weist ferner eine erste Steuereinheit auf, die dafür eingerichtet ist, mit dem zumindest einen ersten Sensor zum Erfassen von Umgebungsdaten eines Kraftfahrzeugs, mit dem zumindest einen zweiten Sensor zum Erfassen von Zustandsdaten des Kraftfahrzeugs und mit dem ersten Kommunikationsmodul des Kraftfahrzeugs zu kommunizieren. Die Steuereinheit ist ferner dafür eingerichtet, die Schritte des Kraftfahrzeugs in dem erfindungsgemäßen Verfahren durchzuführen. Die erste Steuereinheit ist insbesondere dazu ausgebildet, Fahrzeugdaten mittels zumindest eines zum Erfassen von Umgebungsdaten eingerichteten ersten Sensors und/oder mittels zumindest eines zum Erfassen von Fahrzeugdaten eingerichteten zweiten Sensors zu erfassen, einen Datensatz basierend auf den erfassten Fahrzeugdaten zu erstellen, wobei der Datensatz Informationen zum Ort und/oder zur Zeit der Datenerfassung aufweist, Gruppeninformationen von anderen Fahrzeugen mittels Fahrzeug-zu-Fahrzeug Kommunikation via des ersten Kommunikationsmoduls zu empfangen, Verkehrsflussdaten anhand der von den mittels Fahrzeug-zu-Fahrzeug Kommunikation empfangenen Gruppeninformationen zu ermitteln, den Datensatz basierend auf den Verkehrsflussdaten durch örtliche Verschleierung der Informationen zum Ort der Datenerfassung und/oder durch zeitliche Verschleierung der Informationen zur Zeit der Datenerfassung zu anonymisieren und den anonymisierten Datensatz an einen Netzwerkserver zu übermitteln. Bevorzugte Ausführungsformen des Kraftfahrzeugs entsprechen den mit Bezug zum erfindungsgemäßen Verfahren vorstehend erläuterten bevorzugten Durchführungsformen.

Ein weiterer Aspekt der Erfindung betrifft ein Verfahren einer Steuereinheit eines Kraftfahrzeugs, welches zumindest einen zum Erfassen von Umgebungsdaten eingerichteten ersten Sensor, zumindest einen zum Erfassen von Zustandsdaten des Kraftfahrzeugs eingerichteten zweiten Sensor und ein Kommunikationsmodul, ein zum automatischen Fahren des Kraftfahrzeugs eingerichtetes Fahrsystem, sowie die Steuereinheit aufweist, wobei das Verfahren zumindest die folgenden Schritte aufweist: Erfassen von Fahrzeugdaten mittels zumindest eines zum Erfassen von Umgebungsdaten eingerichteten ersten Sensors und/oder mittels zumindest eines zum Erfassen von Fahrzeugdaten eingerichteten zweiten Sensors; Erstellen eines Datensatzes basierend auf erfassten Fahrzeugdaten, wobei der Datensatz Informationen zum Ort und/oder zur Zeit der Datenerfassung aufweist; Empfangen von Gruppeninformationen von anderen Fahrzeugen mittels Fahrzeug-zu-Fahrzeug Kommunikation; Ermitteln von Verkehrsflussdaten anhand der von den mittels Fahrzeug-zu-Fahrzeug Kommunikation empfangenen Gruppeninformationen; Anonymisieren des Datensatzes basierend auf den Verkehrsflussdaten durch örtliche Verschleierung der Informationen zum Ort der Datenerfassung und/oder durch zeitliche Verschleierung der Informationen zur Zeit der Datenerfassung; und Übermitteln des anonymisierten Datensatzes an einen Netzwerkserver.

Ein weiterer Aspekt der Erfindung betrifft ein Computerprogramm, umfassend Befehle, die bei der Ausführung des Programms durch einen Computer, wie beispielsweise eine Steuereinheit eines Kraftfahrzeugs, diesen veranlassen, die Schritte des Kraftfahrzeugs im erfindungsgemäßen Verfahren durchzuführen, insbesondere die Schritte: Erstellen eines Datensatzes basierend auf erfassten Fahrzeugdaten, wobei der Datensatz Informationen zum Ort und/oder zur Zeit der Datenerfassung aufweist; Empfangen von Gruppeninformationen von anderen Fahrzeugen mittels Fahrzeug-zu-Fahrzeug Kommunikation; Ermitteln von Verkehrsflussdaten anhand der von den mittels Fahrzeug-zu-Fahrzeug Kommunikation empfangenen Gruppeninformationen; Anonymisieren des Datensatzes basierend auf den Verkehrsflussdaten durch örtliche Verschleierung der Informationen zum Ort der Datenerfassung und/oder durch zeitliche Verschleierung der Informationen zur Zeit der Datenerfassung; und Übermitteln des anonymisierten Datensatzes an einen Netzwerkserver.

Ein weiterer Aspekt der Erfindung betrifft einen Netzwerkserver, aufweisend ein zur Datenkommunikation mit einer Mehrzahl von Kraftfahrzeugen eingerichtetes zweites Kommunikationsmodul und eine zweite Steuereinheit. Der Netzwerkserver weist ferner eine zweite Steuereinheit auf, die dafür eingerichtet ist, mittels eines zweiten Kommunikationsmoduls mit dem ersten Kommunikationsmodul zumindest eines Kraftfahrzeugs zu kommunizieren. Die Steuereinheit ist ferner dafür eingerichtet, die Schritte des Netzwerkservers in dem erfindungsgemäßen Verfahren durchzuführen und ist insbesondere dafür eingerichtet, einen Datensatz basierend auf erfassten Fahrzeugdaten von einem Kraftfahrzeug zu empfangen, wobei der Datensatz Informationen zum Ort und/oder zur Zeit der Datenerfassung aufweist, Verkehrsflussdaten von dem Kraftfahrzeug zu empfangen, wobei die Verkehrsflussdaten auf von mittels Fahrzeug-zu-Fahrzeug Kommunikation von anderen Fahrzeugen empfangenen Gruppeninformationen basieren und den Datensatz basierend auf den Verkehrsflussdaten durch örtliche Verschleierung der Informationen zum Ort der Datenerfassung und/oder durch zeitliche Verschleierung der Informationen zur Zeit der Datenerfassung zu anonymisieren. Die Durchführung der einzelnen Schritte und bevorzugte Durchführungsformen entsprechen den mit Bezug zum erfindungsgemäßen Verfahren erläuterten bevorzugten Durchführungsformen.

Ein weiterer Aspekt der Erfindung betrifft ein Verfahren eines Netzwerkservers eines Kraftfahrzeugs, welcher zumindest einen Speicher, ein zur Kommunikation mit einem ersten Kommunikationsmodul zumindest eines Kraftfahrzeugs eingerichtetes zweites Kommunikationsmodul, sowie die zweite Steuereinheit aufweist, wobei das Verfahren zumindest die folgenden Schritte aufweist: Empfangen eines Datensatzes basierend auf erfassten Fahrzeugdaten von einem Kraftfahrzeug, wobei der Datensatz Informationen zum Ort und/oder zur Zeit der Datenerfassung aufweist; Empfangen von Verkehrsflussdaten von dem Kraftfahrzeug, wobei die Verkehrsflussdaten auf von mittels Fahrzeug-zu-Fahrzeug Kommunikation von anderen Fahrzeugen empfangenen Gruppeninformationen basieren; Anonymisieren des Datensatzes basierend auf den Verkehrsflussdaten durch örtliche Verschleierung der Informationen zum Ort der Datenerfassung und/oder durch zeitliche Verschleierung der Informationen zur Zeit der Datenerfassung.

Ein weiterer Aspekt der Erfindung betrifft ein Computerprogramm, umfassend Befehle, die bei der Ausführung des Programms durch einen Computer, wie eine Steuereinheit eines Netzwerkservers, diesen veranlassen, die Schritte des Netzwerkservers im erfindungsgemäßen Verfahren durchzuführen, insbesondere die Schritte: Empfangen eines Datensatzes basierend auf erfassten Fahrzeugdaten von einem Kraftfahrzeug, wobei der Datensatz Informationen zum Ort und/oder zur Zeit der Datenerfassung aufweist; Empfangen von Verkehrsflussdaten von dem Kraftfahrzeug, wobei die Verkehrsflussdaten auf von mittels Fahrzeug-zu-Fahrzeug Kommunikation von anderen Fahrzeugen empfangenen Gruppeninformationen basieren; Anonymisieren des Datensatzes basierend auf den Verkehrsflussdaten durch örtliche Verschleierung der Informationen zum Ort der Datenerfassung und/oder durch zeitliche Verschleierung der Informationen zur Zeit der Datenerfassung.

Ein weiterer Aspekt der vorliegenden Erfindung betrifft ein System aus einem erfindungsgemäßen Kraftfahrzeug wie vorstehend beschrieben und einem erfindungsgemäßen Netzwerkserver wie vorstehend beschrieben. Bevorzugte Ausführungsformen des Systems entsprechen den mit Bezug zu dem Kraftfahrzeug und dem Server erläuterten bevorzugten Ausführungsformen beziehungsweise den bevorzugten Durchführungsformen der Verfahren.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul, sowie ein oder mehreren Sensoren beziehungsweise Kameras zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem erfindungsgemäßen Verfahren abzuweichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Systems aus einem erfindungsgemäßen Kraftfahrzeugs und einem erfindungsgemäßen Netzwerkserver gemäß einer Ausführungsform; und
- Figur 2: eine schematische Darstellung eines erfindungsgemäßen Verfahrens gemäß einer Durchführungsform.

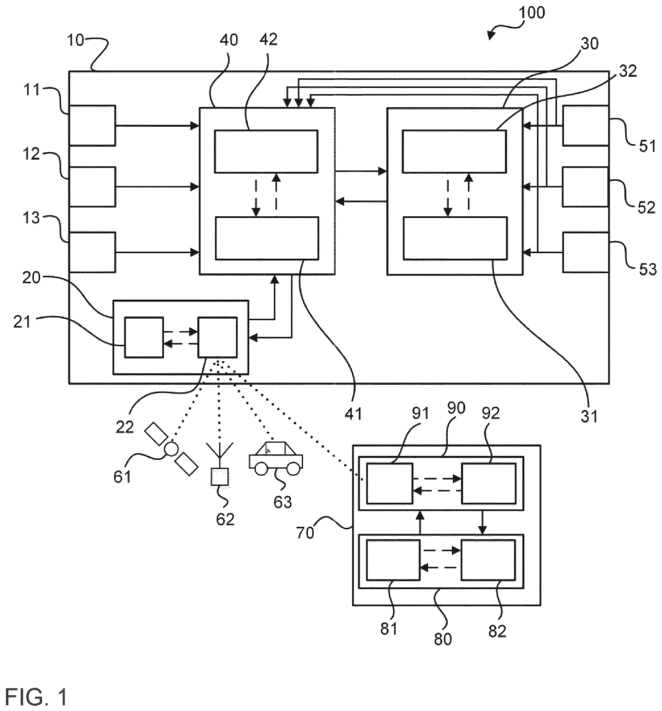

Figur 1 zeigt eine schematische Darstellung, insbesondere ein Blockdiagram eines beispielhaften Kraftfahrzeugs 10, insbesondere eines zweispurigen Kraftfahrzeugs mit Verbrennungs-, Elektro- oder Hybridmotor. Das Kraftfahrzeug 10 umfasst eine Vielzahl erster Sensoren, insbesondere einen ersten Sensor 11, einen zweiten Sensor 12, und einen dritten Sensor 13. Die ersten Sensoren 11, 12, 13 sind eingerichtet zum Erfassen von Umgebungsdaten des Kraftfahrzeugs 10 und umfassen beispielsweise eine Kamera zum Erfassen eines Bildes einer das Kraftfahrzeug 10 unmittelbar umgebenden Umwelt, Abstandssensoren, wie beispielsweise Ultraschallsensoren oder LIDAR, zum Erfassen von Abständen zu das Kraftfahrzeug 10 umgebenden Objekten. Die ersten Sensoren 11, 12, 13 übertragen die von ihnen erfassten Umgebungssignale an eine erste Steuereinheit 40 des Kraftfahrzeugs 10.

Das Kraftfahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Kraftfahrzeug 10 selbst betreffenden Zustandsdaten, wie beispielsweise aktuelle Lage- und Bewegungsinformationen des Kraftfahrzeugs. Bei den zweiten Sensoren handelt es sich folglich beispielsweise um Geschwindigkeitssensoren, Beschleunigungssensoren, Neigungssensoren, Sensoren zum Messen einer Eintauchtiefe eines Stoßdämpfers, Raddrehzahlsensoren oder dergleichen. Die zweiten Sensoren 51, 52, 53 übermitteln die von ihnen erfassten Zustandssignale an die erste Steuereinheit 40 des Kraftfahrzeugs 10. Darüber hinaus übermitteln die zweiten Sensoren 51, 52, 53 ihre Messergebnisse unmittelbar an ein Fahrsystem 30 des Kraftfahrzeugs 10.

Das Kraftfahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder 22 kommuniziert mit dem internen Speicher 21 des ersten Kommunikationsmoduls 20, beispielsweise über einen geeigneten Datenbus. Das erste Kommunikationsmodul 20 kommuniziert auch mit der ersten Steuereinheit 40. Darüber hinaus ist das erste Kommunikationsmodul 20 dafür eingerichtet, mit einem mobilen Netzwerkserver 70, insbesondere einem Backendserver eines Fahrzeugherstellers, Vertragspartners oder Flottenbetreibers zu kommunizieren. Die Kommunikation erfolgt dabei insbesondere mit einem zweiten Kommunikationsmodul 90 des Netzwerkservers 70. Bevorzugt ist das erste Kommunikationsmodul 20 dazu eingerichtet, über ein Mobilfunknetz zu kommunizieren. Ferner ist das erste Kommunikationsmodul 20 dazu eingerichtet, mit anderen Fahrzeugen 63, insbesondere den Kommunikationsmodulen anderer, gleichartiger Fahrzeuge 63 zu kommunizieren, insbesondere über Fahrzeug-zu-Fahrzeug Kommunikation.

Das Kraftfahrzeug 10 weist ferner das Fahrsystem 30 auf, das zum vollständig automatischen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Ferner kommuniziert das Fahrsystem 30 mit der Steuereinheit 40 und empfängt von der Steuereinheit 40 mittels des ersten Kommunikationsmoduls 20 von dem Netzwerkserver 70 empfangene Trajektorieinformationen. Bevorzugt ist das Navigationsmodul 32 dazu eingerichtet, anhand dieser Trajektorieinformationen eine Route des Kraftfahrzeugs 10 zu ermitteln.

Zumindest ein Teil der zweiten Sensoren 51, 52, 53, des Kraftfahrzeugs 10 übermittelt seine Messergebnisse direkt an das Fahrsystem 30. Bei diesen unmittelbar an das Fahrsystem 30 übermittelten Daten handelt es sich insbesondere um aktuelle Lage- und Bewegungsinformationen des Kraftfahrzeugs. Diese werden bevorzugt von Geschwindigkeitssensoren, Beschleunigungssensoren, Neigungssensoren, etc. erfasst.

Das Kraftfahrzeug 10 weist ferner eine erste Steuereinheit 40 auf, welche zum Durchführen der Schritte des Kraftfahrzeugs 10 im erfindungsgemäßen Verfahren eingerichtet ist. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Der Netzwerkserver 70 weist eine zweite Steuereinheit 80 auf, welche zum Durchführen der Schritte des Netzwerkservers 70 im erfindungsgemäßen Verfahren eingerichtet ist. Hierzu verfügt die zweite Steuereinheit 80 über einen internen Speicher 81 und eine CPU 82, welche miteinander kommunizieren, beispielsweise über einen geeigneten Datenbus. Der Netzwerkserver 70 weist ferner ein zweites Kommunikationsmodul 90 auf. Das zweite Kommunikationsmodul 90 weist einen Speicher 92 und einen oder mehrere Transponder beziehungsweise Sendeempfänger 91 auf. Bei den Transpondern 91 handelt es sich um einen Funk-, WLAN-, GPS- oder Bluetooth-Sendeempfänger oder dergleichen. Der Transponder 91 kommuniziert mit dem internen Speicher 92 des zweiten Kommunikationsmoduls 90, beispielsweise über einen geeigneten Datenbus. Bevorzugt ist das zweite Kommunikationsmodul 90 dazu eingerichtet, über ein Mobilfunknetz zu kommunizieren.

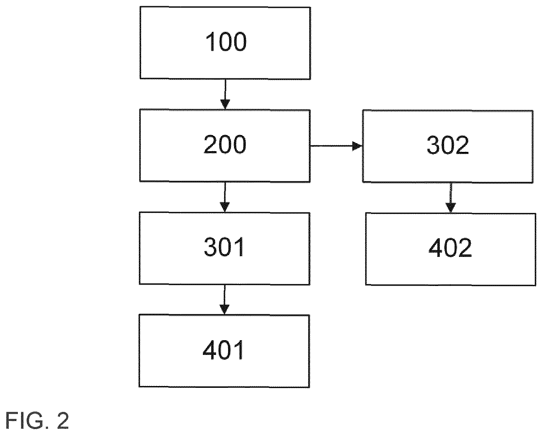

Figur 2 zeigt ein schematisches Ablaufdiagramm eines vom erfindungsgemäßen System 100 durchgeführten erfindungsgemäßen Verfahrens.

In einem ersten Schritt S100 des erfindungsgemäßen Verfahrens erfasst das Kraftfahrzeug 10 mittels zumindest eines ersten Sensors 11, 12, 13 und/oder mittels zumindest eines zweiten Sensors 51, 52, 53 Fahrzeugdaten und erstellt einen Datensatzes basierend auf erfassten Fahrzeugdaten. Dieser Datensatz weist dabei auch Informationen zum Ort und/oder zur Zeit der Datenerfassung auf. Mit anderen Worten übermitteln alle Fahrzeugsensoren 11, 12, 13, 51, 52, 53, wie z.B. Kamera, Radar-, Ultraschall-, Temperatur- oder Klimasensoren, die gemessenen Fahrzeugdaten an die Steuereinheit 40. Hier werden die Daten, sofern dies nicht schon durch die Sensoren geschehen ist, mit einem Zeitstempel und einem Ortsstempel versehen.

In einem nächsten Schritt S200 des erfindungsgemäßen Verfahrens empfängt das Fahrzeug 10 Gruppeninformationen von anderen Fahrzeugen 63 via das erste Kommunikationsmodul 20 und mittels Fahrzeug-zu-Fahrzeug Kommunikation. Die Gruppeninformationen werden dabei nur von solchen Fahrzeugen 63 an das Kraftfahrzeug 10 übermittelt, die ebenfalls Fahrzeugdatensätze an den Netzwerkserver 70 übermitteln. Die Gruppeninformation enthalten für jedes weitere Fahrzeug 63 Informationen zu dem Ort, der Geschwindigkeit und der Fahrtrichtung dieses Fahrzeugs 63. Anhand der Gruppeninformationen werden ferner Verkehrsflussdaten ermittelt, insbesondere wird eine Verkehrsflussprognose im Umfeld des Fahrzeugs 10 errechnet beziehungsweise abgeschätzt.

In einem Schritt S301 führt das Fahrzeug 10 ein Anonymisieren des Datensatzes basierend auf den Verkehrsflussdaten durch örtliche Verschleierung der Informationen zum Ort der Datenerfassung und/oder durch zeitliche Verschleierung der Informationen zur Zeit der Datenerfassung durch, wie untenstehend noch im Detail beschrieben. In Schritt S401 wird der derart anonymisierte Datensatzes an den Netzwerkserver 70 übermittelt. Alternativ übermittelt das Fahrzeug in Schritt S302 den Datensatz der Fahrzeugdaten inklusive der Informationen zum Ort und/oder zur Zeit der Datenerfassung sowie Verkehrsflussdaten an den Netzwerkserver 70, wobei die Verkehrsflussdaten auf von mittels Fahrzeug-zu-Fahrzeug Kommunikation von anderen Fahrzeugen empfangenen Gruppeninformationen basieren. Gemäß dieser Durchführungsform führt der Netzwerkserver in Schritt S402 dass Anonymisieren des Datensatzes basierend auf den Verkehrsflussdaten durch örtliche Verschleierung der Informationen zum Ort der Datenerfassung und/oder durch zeitliche Verschleierung der Informationen zur Zeit der Datenerfassung durch, wie im Folgenden im Detail beschrieben.

In den Schritten S301 beziehungsweise S402 wird zunächst die erforderliche zeitliche oder räumliche Verschiebung anhand der Verkehrsflussprognose ermittelt, um die Identität des Fahrzeugs 10 in einer definierten Anonymisierungsgruppe zu verschleiern. Unter einer Anonymisierungsgruppe ist dabei eine Gruppe zu verstehen, in der ein Individuum trotz seiner Handlungen anonym bleibt, d.h. nicht erkennbarer Teil der Gruppe ist. Durch Vorgabe der Anonymisierungsgruppe, also beispielsweise einer Gesamtheit von zwanzig Fahrzeugen 63 und anhand der Verkehrsflussprognose bezogen auf den Ort der Datenerfassung kann ermittelt werden, in welchem Zeitbereich eine solche Gesamtheit von Fahrzeugen 63 den Erfassungsort passiert (zeitliche Verschleierung) beziehungsweise in welchem Umkreis um den Erfassungsort eine ausreichende Gesamtheit von Fahrzeugen 63 vorhanden ist (örtliche Verschleierung).

Mittels dem so bestimmten Zeitbereich beziehungsweise dem so bestimmten Ortsbereich (Umkreis) werden daraufhin der Zeitstempel beziehungsweise der Ortsstempel des Datensatzes soweit verändert, dass die Identität des Fahrzeugs 10 in der vordefinierten Anonymisierungsgruppe von Fahrzeugen 63 ausreichend versteckt ist. Indem es sich bei allen Fahrzeugen 63 der Anonymisierungsgruppe um ebenfalls Datensätze an den Netzwerkserver 70 übermittelnde Fahrzeuge handelt, ist die Sicherheit der Anonymisierung vorteilhaft hoch. Bei der Anonymisierung werden gegebenenfalls die Freiheitsgrade der eingehenden Datensätze hinsichtlich Verschiebung des Zeit- und des Ortsstempels berücksichtigt, um zu verhindern dass die Verwertbarkeit der Daten durch die Anonymisierung signifikant eingeschränkt wird.

Die Verschiebung des Zeitstempels erfolgt bevorzugt um oder innerhalb des ermittelten Zeitbereichs. Erfolgt die Verschiebung innerhalb des Zeitbereichs wird die Verschiebung auf den Messzeitpunkt über einen Zufallsalgorithmus berechnet und auf die Messdaten addiert. Die Verschiebung des Ortsstempels erfolgt bevorzugt um oder innerhalb des bestimmten Ortsbereichs. Erfolgt die Verschiebung innerhalb des bestimmten Ortsbereichs, wird die Verschiebung auf dem Ortsstempel über einen Zufallsalgorithmus berechnet und auf die Messdaten addiert. Dabei erfolgt die Verschiebung bevorzugt entlang der bereits gefahrenen oder der noch vor dem Fahrzeug liegenden Strecke, um "map matching" zu verhindern.

Nach dem Anonymisieren sind die Daten vorteilhaft derart verändert, dass die einzelnen Daten nicht mehr oder nur mit einem unverhältnismäßig großen Aufwand an Zeit, Kosten und Arbeitskraft einem bestimmten oder bestimmbaren Fahrzeug und somit einer bestimmten oder bestimmbaren natürlichen Person zugeordnet werden können. Beispiele für Daten, die örtlich verschleiert werden, sind Regen- und Wetterdaten, die z.B. für einen Wetterdienst erfasst werden können. Derartige Daten können beispielsweise in ein km-Raster integriert werden, ohne dass der Wert der Daten übermäßig reduziert wird. Dennoch ist es so nicht mehr möglich, auf Basis der Daten Rückschlüsse auf personenbezogene Daten zu ziehen.

Beispiele für Daten, die zeitlich verschleiert werden, sind beispielsweise Daten von erkannten Schildern. Diese Daten sind zeitlich gesehen konstant, so dass selbst eine Verschiebung des Zeitpunktes der Erfassung im Rahmen von mehreren Stunden den Wert der Daten nur bedingt reduziert. Gleichzeitig wird es praktisch unmöglich, Rückschlüsse auf den Fahrer zu ziehen.

Ziel der zeitlichen und örtlichen Verschleierung ist es, eine Gruppenanonymität zu erreichen. Dies ist so zu verstehen, dass die erfassten Daten nur noch einer hinreichend großen Gruppe von Fahrzeugen zugeordnet werden können, nicht mehr einem einzigen oder einigen wenigen Fahrzeugen. Dabei kann es relevant sein, wo und wann die Daten erfasst werden. Tagsüber auf einer Autobahn wird ein Messwert in der Regel von einer Vielzahl von Fahrzeugen in kurzer Zeit erfasst. Hier ist eine geringfügige Verschleierung ausreichend. Nachts auf einer wenig befahrenen Nebenstraße wird ein Messwert unter Umständen nur von einem einzigen Fahrzeug erfasst. In diesem Fall ist eine weitreichende Verschleierung erforderlich. Diesem Umstand wird durch das Berücksichtigung der Gruppeninformationen erfindungsgemäß Rechnung getragen.

### Bezugszeichenliste

- 10: Kraftfahrzeug
- 11: erster Sensor
- 12: zweiter Sensor
- 13: dritter Sensor
- 20: Kommunikationsmodul
- 21: Speicher
- 22: Transponder
- 30: Fahrsystem
- 31: Speicher
- 32: Navigationsmodul
- 40: Steuereinheit
- 41: Speicher
- 42: CPU
- 51: vierter Sensor
- 52: fünfter Sensor
- 53: sechster Sensor
- 61: Satellit
- 62: Basisstation
- 63: anderes Kraftfahrzeug
- 70: Netzwerkserver
- 80: Steuereinheit
- 81: Speicher
- 82: CPU
- 90: Kommunikationsmodul
- 91: Transponder
- 92: Speicher
- 100: System

## Patentansprüche

1. Verfahren eines Kraftfahrzeugs (10) zum Anonymisieren von Fahrzeugdaten, aufweisend:
Erstellen eines Datensatzes basierend auf erfassten Fahrzeugdaten, wobei der Datensatz Informationen zum Ort und/oder zur Zeit der Datenerfassung aufweist;
Empfangen von Gruppeninformationen von anderen Fahrzeugen (63) mittels Fahrzeug-zu-Fahrzeug Kommunikation,
Ermitteln einer Anzahl der anderen Fahrzeuge (63), mit denen die Fahrzeug-zu-Fahrzeug Kommunikation durchgeführt wird, anhand der von den mittels Fahrzeug-zu-Fahrzeug Kommunikation empfangenen Gruppeninformationen;
Anonymisieren des Datensatzes durch örtliche Verschleierung der Informationen zum Ort der Datenerfassung basierend auf der anhand der Gruppeninformationen ermittelten Anzahl der anderen Fahrzeuge (63) und/oder durch zeitliche Verschleierung der Informationen zur Zeit der Datenerfassung basierend auf der anhand der Gruppeninformationen ermittelten Anzahl der anderen Fahrzeuge (63); und
Übermitteln des anonymisierten Datensatzes an einen Netzwerkserver (70).

2. Verfahren nach Anspruch 1, wobei ferner ein Erfassen von Fahrzeugdaten mittels zumindest eines zum Erfassen von Umgebungsdaten eingerichteten ersten Sensors (11, 12, 13) und/oder mittels zumindest eines zum Erfassen von Fahrzeugdaten eingerichteten zweiten Sensors (51, 52, 53) erfolgt und/oder wobei die Fahrzeug-zu-Fahrzeug Kommunikation mittels eines ersten Kommunikationsmoduls (20) erfolgt.

3. Verfahren eines Netzwerkservers (70) zum Anonymisieren von Fahrzeugdaten, aufweisend:
Empfangen eines Datensatzes basierend auf erfassten Fahrzeugdaten von einem Kraftfahrzeug (10), wobei der Datensatz Informationen zum Ort und/oder zur Zeit der Datenerfassung aufweist;
Empfangen einer Anzahl anderer Fahrzeuge (63) von dem Kraftfahrzeug (10), wobei die Anzahl anderer Fahrzeuge (63) auf von mittels Fahrzeug-zu-Fahrzeug Kommunikation von den anderen Fahrzeugen (63) empfangenen Gruppeninformationen basiert und die anderen Fahrzeuge (63) zählt, mit denen das Kraftfahrzeug (10) die Fahrzeug-zu-Fahrzeug Kommunikation durchführt;
Anonymisieren des Datensatzes durch örtliche Verschleierung der Informationen zum Ort der Datenerfassung basierend auf der Anzahl der anhand der Gruppeninformationen ermittelten anderen Fahrzeuge (63) und/oder durch zeitliche Verschleierung der Informationen zur Zeit der Datenerfassung basierend auf der Anzahl der anhand der Gruppeninformationen ermittelten anderen Fahrzeuge (63).

4. Verfahren nach einem der vorangehenden Ansprüche, wobei die Gruppeninformationen anzeigen, dass die anderen Fahrzeuge (63) ebenfalls Datensätze an den Netzwerkserver (70) übermitteln.

5. Verfahren nach einem der vorangehenden Ansprüche, wobei eine Stärke der örtlichen und/oder zeitlichen Verschleierung umgekehrt proportional zu der ermittelten Anzahl der anderen Fahrzeuge (63) ist.

6. Verfahren nach einem der vorangehenden Ansprüche, wobei die Gruppeninformationen Ort, Geschwindigkeit und/oder Fahrtrichtung der anderen Fahrzeuge (63) spezifizieren.

7. Verfahren nach einem der vorangehenden Ansprüche, wobei die Verkehrsflussdaten ferner auf von durch Fahrzeugsensoren erfassten Umgebungsdaten basieren.

8. Kraftfahrzeug (10), aufweisend zumindest einen zum Erfassen von Umgebungsdaten eingerichteten ersten Sensor (11, 12, 13); zumindest einen zum Erfassen von Fahrzeugdaten eingerichteten zweiten Sensor (51, 52, 53); ein zur Kommunikation mit einem Netzwerkserver (70) und anderen Kraftfahrzeugen (63) eingerichtetes erstes Kommunikationsmodul (20); und eine erste Steuereinheit (40), wobei die Steuereinheit (40) dafür eingerichtet ist, ein Verfahren nach Anspruch 1 durchzuführen.

9. Netzwerkserver (70), aufweisend ein zur Datenkommunikation mit einer Mehrzahl von Kraftfahrzeugen (10) eingerichtetes zweites Kommunikationsmodul (90); und eine zweite Steuereinheit (80), wobei die Steuereinheit (80) dafür eingerichtet ist, ein Verfahren nach Anspruch 3 durchzuführen.

10. Computerprogramm, umfassend Befehle, die bei der Ausführung des Programms durch einen Computer diesen veranlassen, die Schritte des Verfahrens nach einem der Ansprüche 1 bis 7 auszuführen.

## Claims

1. Method for a motor vehicle (10) to anonymize vehicle data, the method comprising:
creating a data set based on captured vehicle data, wherein the data set comprises information regarding the location and/or time of data capture;
receiving group information from other vehicles (63) by means of vehicle-to-vehicle communication,
ascertaining on the basis of the group information received by means of vehicle-to-vehicle communication a number of other vehicles (63) with which the vehicle-to-vehicle communication is performed;
anonymizing the data set by locationally obfuscating the information regarding the location of data capture on the basis of the number of other vehicles (63) ascertained on the basis of the group information and/or by temporally obfuscating the information regarding the time of data capture on the basis of the number of other vehicles (63) ascertained on the basis of the group information; and
transmitting the anonymized data set to a network server (70).

2. Method according to claim 1, wherein furthermore vehicle data are captured by means of at least one first sensor (11, 12, 13) configured to capture environmental data and/or by means of at least one second sensor (51, 52, 53) configured to capture vehicle data and/or wherein the vehicle-to-vehicle communication is carried out by means of a first communication module (20).

3. Method for a network server (70) to anonymize vehicle data, the method comprising:
receiving from a motor vehicle (10) a data set based on captured vehicle data, wherein the data set comprises information regarding the location and/or time of data capture;
receiving a number of other vehicles (63) from the motor vehicle (10), wherein the number of other vehicles (63) is based on group information received from the other vehicles (63) by means of vehicle-to-vehicle communication and counts the other vehicles (63) with which the motor vehicle (10) performs the vehicle-to-vehicle communication;
anonymizing the data set by locationally obfuscating the information regarding the location of data capture on the basis of the number of other vehicles (63) ascertained on the basis of the group information and/or by temporally obfuscating the information regarding the time of data capture on the basis of the number of other vehicles (63) ascertained on the basis of the group information.

4. Method according to any of the preceding claims, wherein the group information indicates that the other vehicles (63) also transmit data sets to the network server (70).

5. Method according to any of the preceding claims, wherein a strength of the locational and/or temporal obfuscation is inversely proportional to the ascertained number of other vehicles (63).

6. Method according to any of the preceding claims, wherein the group information specifies the location, the speed, and/or the direction of driving of the other vehicles (63).

7. Method according to any of the preceding claims, wherein the traffic flow data are further based on environmental data captured by vehicle sensors.

8. Motor vehicle (10) comprising at least one first sensor (11, 12, 13) configured to capture environmental data; at least one second sensor (51, 52, 53) configured to capture vehicle data; a first communication module (20) configured to communicate with a network server (70) and other motor vehicles (63); and a first control unit (40), wherein the control unit (40) is configured to perform a method according to claim 1.

9. Network server (70) comprising a second communication module (90) configured for data communication with a plurality of motor vehicles (10); and a control unit (80), wherein the control unit (80) is configured to perform a method according to claim 3.

10. Computer program comprising commands which, when the program is executed by a computer, cause said computer to carry out the steps of the method according to any of claims 1 to 7.

## Revendications

1. Procédé d'un véhicule automobile (10) pour l'anonymisation de données de véhicule, présentant :
la création d'un jeu de données basé sur des données de véhicule acquises, dans lequel le jeu de données présente des informations sur le lieu et/ou sur le moment de l'acquisition de données ;
la réception d'informations de groupe d'autres véhicules (63) par le biais d'une communication de véhicule à véhicule,
la détermination d'un nombre des autres véhicules (63) avec lesquels la communication de véhicule à véhicule est réalisée, à l'aide des informations de groupe reçues par le biais de la communication de véhicule à véhicule ;
l'anonymisation du jeu de données en masquant localement les informations sur le lieu d'acquisition de données sur la base du nombre des autres véhicules (63) déterminé à l'aide des informations de groupe et/ou en masquant temporellement les informations sur le moment de l'acquisition de données sur la base du nombre des autres véhicules (63) déterminé à l'aide des informations de groupe ; et
la transmission du jeu de données anonymisé à un serveur de réseau (70).

2. Procédé selon la revendication 1, dans lequel en outre une acquisition de données de véhicule est effectuée par le biais d'au moins un premier capteur (11, 12, 13) conçu pour l'acquisition de données d'environnement et/ou par le biais d'au moins un second capteur (51, 52, 53) conçu pour l'acquisition de données de véhicule et/ou dans lequel la communication de véhicule à véhicule est effectuée par le biais d'un premier module de communication (20).

3. Procédé d'un serveur de réseau (70) pour l'anonymisation de données de véhicule, présentant :
la réception d'un jeu de données basé sur des données de véhicule acquises provenant d'un véhicule automobile (10), dans lequel le jeu de données présente des informations sur le lieu et/ou sur le moment de l'acquisition de données ;
la réception d'un nombre d'autres véhicules (63) du véhicule automobile (10), dans lequel le nombre d'autres véhicules (63) est basé sur des informations de groupe reçues des autres véhicules (63) par communication de véhicule à véhicule et compte les autres véhicules (63) avec lesquels le véhicule automobile (10) réalise la communication de véhicule à véhicule ;
l'anonymisation du jeu de données en masquant localement les informations sur le lieu d'acquisition de données sur la base du nombre des autres véhicules (63) déterminé à l'aide des informations de groupe et/ou en masquant temporellement les informations sur le moment de l'acquisition de données sur la base du nombre des autres véhicules (63) déterminé à l'aide des informations de groupe.

4. Procédé selon l'une des revendications précédentes, dans lequel les informations de groupe indiquent que les autres véhicules (63) transmettent également des jeux de données au serveur de réseau (70).

5. Procédé selon l'une des revendications précédentes, dans lequel une intensité du masquage local et/ou temporel est inversement proportionnelle au nombre déterminé des autres véhicules (63).

6. Procédé selon l'une des revendications précédentes, dans lequel les informations de groupe spécifient le lieu, la vitesse et/ou la direction de déplacement des autres véhicules (63).

7. Procédé selon l'une des revendications précédentes, dans lequel les données de flux de trafic sont en outre basées sur des données d'environnement acquises par des capteurs de véhicule.

8. Véhicule automobile (10) présentant au moins un premier capteur (11, 12, 13) conçu pour acquérir des données environnementales ; au moins un second capteur (51, 52, 53) conçu pour acquérir des données de véhicule ; un premier module de communication (20) conçu pour communiquer avec un serveur de réseau (70) et d'autres véhicules automobiles (63) ; et une première unité de commande (40), dans lequel l'unité de commande (40) est conçue pour réaliser un procédé selon la revendication 1.

9. Serveur de réseau (70), présentant un second module de communication (90) conçu pour communiquer des données avec une pluralité de véhicules automobiles (10) ; et une seconde unité de commande (80), dans lequel l'unité de commande (80) est conçue pour réaliser un procédé selon la revendication 3.

10. Programme d'ordinateur, comprenant des instructions qui, lors de l'exécution du programme par un ordinateur, amènent celui-ci à exécuter les étapes du procédé selon l'une des revendications 1 à 7.
